# EUROPEAN PATENT APPLICATION

(11) **EP 4 585 863 A1**
(43) Date of publication of application: **16.07.2025**
(21) Application number: 23894809.5
(22) Date of filing: 11.10.2023
(51) Int. Cl.: F24F 11/56, F24F 11/65, F24F 11/46, H04L 67/125, F24F 110/10, F24F 120/20

(54) **ELECTRONIC DEVICE FOR CONTROLLING TEMPERATURE OF AIR CONDITIONER AND METHOD FOR CONTROLLING SAME**

(30) Priority: 23.11.2022 KR 20220158579
(71) Applicant: Samsung Electronics Co., Ltd., Suwon-si, Gyeonggi-do 16677 (KR)
(72) Inventor: HWANG, Jun, Suwon-si, Gyeonggi-do 16677 (KR); LEE, Sukho, Suwon-si, Gyeonggi-do 16677 (KR); KIM, Seokkyun, Suwon-si, Gyeonggi-do 16677 (KR); SHIN, Dongjun, Suwon-si, Gyeonggi-do 16677 (KR); AHN, Byoungok, Suwon-si, Gyeonggi-do 16677 (KR); LEE, Sangwoo, Suwon-si, Gyeonggi-do 16677 (KR); CHO, Ilyong, Suwon-si, Gyeonggi-do 16677 (KR); CHO, Hyeongkyu, Suwon-si, Gyeonggi-do 16677 (KR)
(74) Representative: Walaski, Jan Filip
(86) International application number: PCT/KR2023/015653
(87) International publication number: WO 2024/111879

(57) **Abstract**

An electronic apparatus is provided. The electronic apparatus according to an embodiment includes a communication interface configured to perform communication with an air conditioner, an input interface, memory storing at least one instruction and a user's preferred temperature range, and at least one processor configured to, by executing the at least one instruction, control the communication interface to receive information about an operation mode of the air conditioner from the air conditioner, and based on the operation mode of the air conditioner being a normal mode, determine a set temperature input through the input interface as a target temperature, based on the operation mode of the air conditioner being a power saving mode, determine a target temperature having a preset temperature difference from the set temperature based on the set temperature which is set by a user and the stored user's preferred temperature range, and control the communication interface to transmit the determined target temperature to the air conditioner.

## Description

### [Technical Field]

The present disclosure relates to an electronic apparatus for controlling the temperature of an air conditioner and a controlling method thereof.

### [Background Art]

Recently, air conditioners have been installed in various places such as homes, offices, shops, etc.

An air conditioner can cool a room by drawing in air from the room, lowering the temperature of the air through heat exchange with a refrigerant, and discharging it into the room. To do this, the air conditioner includes an outdoor unit which is installed in an outdoor space, and an indoor unit which is installed in an indoor space.

Meanwhile, the temperature can be controlled to reduce the power consumption of the air conditioner.

### [Disclosure]

### [Technical Solution]

An electronic apparatus according to an embodiment includes a communication interface configured to perform communication with an air conditioner, an input interface, memory storing at least one instruction and a user's preferred temperature range, and at least one processor configured to, by executing the at least one instruction, control the communication interface to receive information about an operation mode of the air conditioner from the air conditioner, and based on the operation mode of the air conditioner being a normal mode, determine a set temperature input through the input interface as a target temperature. The at least one processor is configured to, based on the operation mode of the air conditioner being a power saving mode, determine a target temperature having a preset temperature difference from the set temperature based on the set temperature which is set by a user and the stored user's preferred temperature range, and control the communication interface to transmit the determined target temperature to the air conditioner.

In a controlling method of an electronic apparatus, including controlling a communication interface to receive information about an operation mode of an air conditioner from the air conditioner, and based on the operation mode of the air conditioner being a normal mode, determining a set temperature input through an input interface as a target temperature, the method includes determining a target temperature having a preset temperature difference from the set temperature based on the set temperature which is set by a user and the stored user's preferred temperature range, and controlling the communication interface to transmit the determined target temperature to the air conditioner.

In a non-transitory computer-readable recording medium storing a computer instruction, the computer instruction, when executed by a processor of an electronic apparatus, causes the electronic apparatus to control the communication interface to receive information about an operation mode of the air conditioner from the air conditioner, and based on the operation mode of the air conditioner being a normal mode, determine a set temperature input through the input interface as a target temperature, based on the operation mode of the air conditioner being a power saving mode, determine a target temperature having a preset temperature difference from the set temperature based on the set temperature which is set by a user and the stored user's preferred temperature range, and control the communication interface to transmit the determined target temperature to the air conditioner.

### [Description of Drawings]

FIG. 1 is a table illustrating an example power saving rate according to a prior art;
FIG. 2 is a block diagram illustrating an example configuration of an electronic apparatus according to various embodiments;
FIG. 3 is a flowchart illustrating an example operation of a power saving mode of an electronic apparatus according to various embodiments;
FIG. 4 is a flowchart illustrating an example process of changing a preset temperature difference according to various embodiments;
FIG. 5 is a diagram illustrating an example of a target temperature determined through a user input according to various embodiments;
FIG. 6 is a table illustrating an example power saving rate of a power saving mode according to various embodiments;
FIG. 7 is a block diagram illustrating an example configuration of an electronic apparatus according to various embodiments; and
FIG. 8 is a flowchart illustrating an example method of controlling an electronic apparatus according to various embodiments.

### [Mode for Invention]

The various example embodiments of the present disclosure may be modified in various ways, so example embodiments are illustrated in the drawings and described in detail in the detailed description. However, it is to be understood that the disclosure is not limited to specific example embodiments, but include all modifications, equivalents, and/or alternatives according to example embodiments of the disclosure. Throughout the description of the accompanying drawings, similar components may be denoted by similar reference numerals.

In describing the disclosure, when a detailed description for the known functions or configurations related to the disclosure may unnecessarily obscure the gist of the disclosure, the detailed description therefor may be omitted.

The following example embodiments may be modified in several different forms, and the scope of the technical spirit of the disclosure is not limited to the following example embodiments. Rather, these example embodiments are provided to describe the spirit of the disclosure to those skilled in the art.

Terms used in the disclosure are used to describe various example embodiments rather than limiting the scope of the disclosure. Singular forms are intended to include plural forms unless the context clearly indicates otherwise.

In the disclosure, the expressions "have", "may have", "include" or "may include" used herein indicate existence of corresponding features (e.g., elements such as numeric values, functions, operations, or components), but do not exclude presence of additional features.

In the disclosure, the expressions "A or B", "at least one of A or/and B", or "one or more of A or/and B", and the like may include any and all combinations of one or more of the items listed together. For example, the term "A or B", "at least one of A and B", or "at least one of A or B" may refer to all of the case (1) where at least one A is included, the case (2) where at least one B is included, or the case (3) where both of at least one A and at least one B are included.

Expressions "first", "second", "1st," "2nd," or the like, used in the disclosure may indicate various components regardless of sequence and/or importance of the components, will be used in order to distinguish one component from the other components, and do not limit the corresponding components.

When it is described that an element (e.g., a first element) is referred to as being "(operatively or communicatively) coupled with/to" or "connected to" another element (e.g., a second element), it should be understood that it may be directly coupled with/to or connected to the other element, or they may be coupled with/to or connected to each other through an intervening element (e.g., a third element).

On the other hand, when an element (e.g., a first element) is referred to as being "directly coupled with/to" or "directly connected to" another element (e.g., a second element), it should be understood that there is no intervening element (e.g., a third element) in-between.

An expression "~configured (or set) to" used in the disclosure may be replaced by an expression, for example, "suitable for," "having the capacity to," "~designed to," "~adapted to," "~made to," or "~capable of" depending on a situation. A term "~configured (or set) to" may not necessarily refer to "specifically designed to" in hardware.

Instead, an expression "~an apparatus configured to" may refer, for example, to an apparatus "is capable of" together with other apparatuses or components. For example, a "processor configured (or set) to perform A, B, and C" may refer, for example, to a dedicated processor (e.g., an embedded processor) for performing the corresponding operations or a generic-purpose processor (e.g., a central processing unit (CPU) or an application processor) that may perform the corresponding operations by executing one or more software programs stored in a memory device.

In various example embodiments, a 'module' or a 'unit' may perform at least one function or operation, and be implemented as hardware or software or be implemented as a combination of hardware and software. In addition, a plurality of 'modules' or a plurality of 'unit' may be integrated into at least one module and be implemented as at least one processor except for a 'module' or a 'unit' that needs to be implemented as specific hardware.

Various elements and areas in the drawings are schematically drawn in the drawings. Therefore, the technical concept of the disclosure is not limited by a relative size or spacing drawn in the accompanying drawings.

Hereinafter, various example embodiments according to the present disclosure will be described in greater detail with reference to the accompanying drawings.

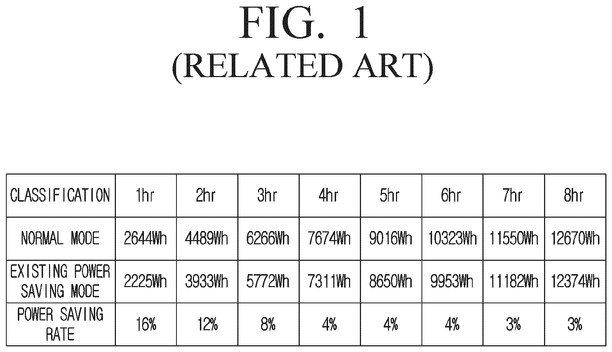

FIG. 1 is a table provided illustrating a power saving rate according to the prior art.

Referring to FIG. 1, an air conditioner may operate in a normal mode and an existing power saving mode. The normal mode and the power saving mode are operation modes of the air conditioner. The normal mode may be an operation mode of the air conditioner according to a set temperature which is set by a user, and the existing power saving mode may be an operation mode of the air conditioner, which follows the set temperature set by the user but operates by reducing a command frequency that controls the compressor of the air conditioner. Here, the command frequency is related to the speed at which the compressor operates, and the higher the command frequency of the compressor, the faster the temperature changes, and the lower the command frequency of the compressor, the slower the temperature changes. The existing power saving mode may be a Demand Response (DR) mode. In other words, in the DR mode, the command frequency of the compressor may be reduced by 27%.

The power consumption of the air conditioner may increase over time. For example, when the air conditioner operates in the normal mode for 1 hour, the air conditioner may consume 2644 Wh, and when the air conditioner operates in the normal mode for 8 hours, the air conditioner may consume 12670 Wh. Alternatively, when the air conditioner operates in the existing power saving mode for 1 hour, 2225 Wh of power consumption could be generated, and when the air conditioner operates in the existing power saving mode for 8 hours, 12374 Wh of power consumption could be generated. Such power consumption is only example, and the power consumption may vary depending on the type of air conditioner, the environment surrounding the air conditioner, etc.

In addition, when the air conditioner operates in the existing power saving mode, the power saving rate may decrease over time. For example, when the air conditioner operates for 1 hour, the power saving rate may be 16%, but when the air conditioner operates for 8 hours, the power saving rate may be 3%. This decrease in power saving rate may be related to the fact that the existing power saving mode only reduces the command frequency of the compressor, but the air conditioner operates until the indoor temperature reaches the set temperature, so that as the operating time of the air conditioner increases, the power consumption of the air conditioner does not differ significantly. The decrease in power saving rate may also be related to the fact that over the time the air conditioner operates, the command frequency of the compressor decreases as the indoor temperature approaches the set temperature, and the power saving mode of decreasing the command frequency at a low command frequency does not make a significant difference in the power consumption of the air conditioner.

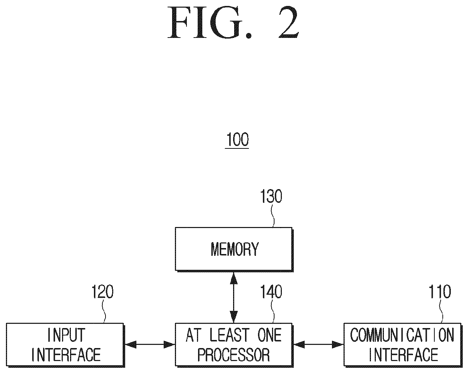

Referring to FIG. 2, the electronic apparatus 100 may include a communication interface (e.g., including communication circuitry) 110, an input interface (e.g., including input circuitry) 120, memory 130, and at least one processor (e.g., including processing circuitry) 140. However, the components of the electronic apparatus 100 illustrated in FIG. 2 are only examples, and other components may be added or some components may be omitted.

The communication interface 110 may include various communication circuitry and performs communication with an external device to receive various types of data and information. For example, the communication interface 110 may receive various types of data, information, etc. from home appliances (e.g., display devices, air conditioners, air purifiers, etc.), external storage media (e.g., USB memory), external servers (e.g., web hard), etc. through a communication method such as access point (AP)-based wireless fidelity (Wi-Fi, wireless local area network (LAN)), Bluetooth, Zigbee, wired/wireless local area network (LAN), wide area network (WAN), Ethernet, IEEE 1394, high definition multimedia interface (HDMI), Universal Serial Bus (USB), mobile high-definition link (MHL), audio engineering society/European broadcasting union (AES/EBU) communication, optical communication, coaxial communication, etc. In particular, the electronic apparatus 100 may perform communication with an air conditioner through the communication interface 110.

The input interface 120 includes circuitry, and may receive a user command for setting or selecting various functions supported by the electronic apparatus 100. To this end, the input interface 120 may include a plurality of buttons, and may be implemented as a touch screen capable of performing the functions of the display simultaneously.

The processor 140 may include various processing circuitry and control the operations of the electronic apparatus 100 based on a user command input through the input interface 120. For example, the electronic apparatus 100 may control the electronic apparatus 100 based on an on/off command of the electronic apparatus 100, an on/off command of a function of the electronic apparatus 100, or the like, which is input through the input interface 120.

The electronic apparatus 100 may receive a user input through the input interface 120. Accordingly, the electronic apparatus 100 may change the set temperature or target temperature.

The memory 130 may store data required for various embodiments of the present disclosure. The memory 130 may be implemented as a memory embedded in the electronic apparatus 100 or as a memory detachable from the electronic apparatus 100 depending on the data storage purpose.

For example, in the case of data for driving the electronic apparatus 100, the data may be stored in the memory embedded in the electronic apparatus 100, and in the case of data for the expansion function of the electronic apparatus 100, the data may be stored in the memory detachable from the electronic apparatus 100. Meanwhile, the memory embedded in the electronic apparatus 100 may be implemented as at least one of a volatile memory (e.g. a dynamic RAM (DRAM), a static RAM (SRAM), or a synchronous dynamic RAM (SDRAM)), or a non-volatile memory (e.g., a one-time programmable ROM (OTPROM), a programmable ROM (PROM), an erasable and programmable ROM (EPROM), an electrically erasable and programmable ROM (EEPROM), a mask ROM, a flash ROM, a flash memory (e.g. a NAND flash or a NOR flash), a hard drive, or a solid state drive (SSD)). The memory detachable from the electronic apparatus 100 may be implemented in the form of a memory card (e.g., a compact flash (CF), a secure digital (SD), a micro secure digital (Micro-SD), a mini secure digital (Mini-SD), an extreme digital (xD), or a multi-media card (MMC)), an external memory connectable to a USB port (e.g., a USB memory), or the like. According to an embodiment, the memory 130 may store a computer program including at least one instruction or instructions for controlling the electronic apparatus 100.

The memory 130 may store at least one instruction and a user's preferred temperature range.

The at least one processor 140 may be implemented as a digital signal processor (DSP) for processing digital signals, a microprocessor, or a time controller (TCON). However, the at least one processor 140 is not limited thereto, and the at least one processor 140 may include one or more of a central processing unit (CPU), a micro controller unit (MCU), a micro processing unit (MPU), a controller, an application processor (AP), a communication processor (CP), an ARM processor, and an Artificial Intelligence (AI) processor, or may be defined as the corresponding term. Further, the at least one processor 140 may be implemented as a system on chip (SoC) with embedded processing algorithms, a large scale integration (LSI), or in the form of a field programmable gate array (FPGA). The at least one processor 140 may perform various functions by executing computer executable instructions stored in the memory.

The at least one processor 140 may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The at least one processor 140 may control one or any combination of the other components of the electronic apparatus, and may perform communication-related operations or data processing. The at least one processor 140 may execute at least one instruction stored in the memory. For example, the at least one processor 140 may perform a method according to an embodiment by executing at least one instruction stored in the memory.

When a method according to an embodiment includes a plurality of operations, the plurality of operations may be performed by one processor or by a plurality of processors. For example, when a first operation, a second operation, and a third operation are performed by the method according to an embodiment, all of the first operation, the second operation, and the third operation may be performed by the first processor, or the first operation and the second operation may be performed by the first processor (e.g., a general-purpose processor) and the third operation may be performed by the second processor (e.g., an artificial intelligence-dedicated processor).

The at least one processor 140 may be implemented as a single core processor including a single core, or as one or more multicore processors including a plurality of cores (e.g., homogeneous multicore or heterogeneous multicore). When the at least one processor 140 is implemented as a multicore processor, each of the plurality of cores included in the multicore processor may include internal memory of the processor, such as cache memory and an on-chip memory, and a common cache shared by the plurality of cores may be included in the multicore processor. Each of the plurality of cores (or some of the plurality of cores) included in the multi-core processor may independently read and perform program instructions to implement the method according to an embodiment, or all (or some) of the plurality of cores may be coupled to read and perform program instructions to implement the method according to an embodiment.

When a method according to an embodiment includes a plurality of operations, the plurality of operations may be performed by one core of a plurality of cores included in a multi-core processor, or may be performed by a plurality of cores. For example, when a first operation, a second operation, and a third operation are performed by a method according to an embodiment, all of the first operation, the second operation, and the third operation may be performed by the first core included in the multi-core processor, or the first operation and the second operation may be performed by the first core included in the multi-core processor and the third operation may be performed by the second core included in the multi-core processor.

Hereinafter, the at least one processor 140 will be referred to as the processor 140, and it will be understood that the processor 140 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

When the operation mode of the air conditioner is a power saving mode, the processor 140 may determine a target temperature that has a preset temperature difference from the set temperature based on the set temperature received from the user and the stored user's preference temperature range.

The processor 140 may control the communication interface to transmit the determined target temperature to the air conditioner.

When the indoor temperature is higher than the target temperature and the target temperature has decreased in response to a user input, the processor 140 may change the preset temperature difference based on the degree to which the target temperature has decreased.

When the indoor temperature is lower than the target temperature and the target temperature has increased in response to a user input, the processor 140 may change the preset temperature difference based on the degree to which the target temperature has increased.

The air conditioner may further include a display, and the processor 140 may control the display to display the degree of reduction in power consumption of the air conditioner according to the preferred temperature range as a power saving rate.

The processor 140 may obtain one temperature from the preferred temperature range through a user input, and determine the obtained temperature as the target temperature.

When the temperature having a preset temperature difference from the set temperature exceeds the preferred temperature range, the processor 140 may determine the target temperature to be a maximum value of the preferred temperature range.

When the temperature having a preset temperature difference from the set temperature is less than the preferred temperature range, the processor 140 may determine the target temperature to be a minimum value of the preferred temperature range.

When the indoor temperature is higher than the set temperature, the processor 140 may determine the target temperature by adding the set temperature and the preset temperature difference.

When the indoor temperature is lower than the set temperature, the processor 140 may determine the target temperature by subtracting the preset temperature difference from the set temperature.

The air conditioner may further include a display, and the processor 140 may compare the power consumption of the air conditioner according to the target temperature and the power consumption of the air conditioner according to the set temperature and control the display to display the degree of reduction in power consumption as a power saving rate.

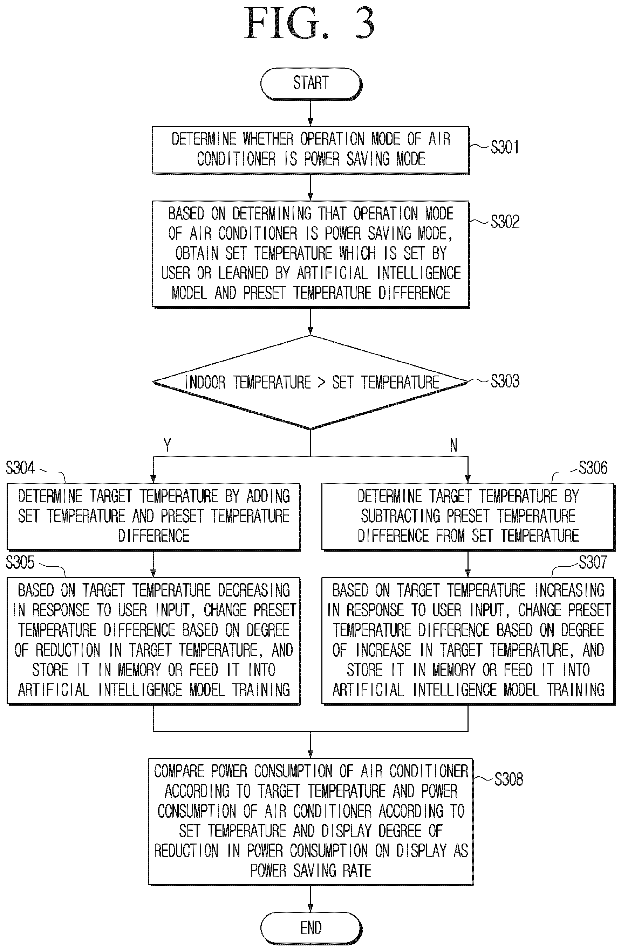

Hereinafter, various operations of the processor 140 will be described in greater detail with reference to FIGS. 3, 4 and 5.

FIG. 3 is a flowchart illustrating an example operation of a power saving mode of the electronic apparatus 100 according to various embodiments.

Referring to FIG. 3, the processor 140 may determine that an operation mode of the air conditioner is a power saving mode (S301). The power saving mode may be an operation mode for reducing power consumption of the air conditioner.

When it is determined that the operation mode of the air conditioner is a power saving mode, the processor 140 may obtain an indoor temperature, a set temperature set by a user or learned by an artificial intelligence model, and a preset temperature difference (S302). The indoor temperature may be an air temperature in a room where the air conditioner is located.

The set temperature may be a temperature set by receiving an input directly from the user or a temperature set by learning the user's preferred temperature through an artificial intelligence model.

The preset temperature difference may be a temperature value for determining the target temperature. In other words, the preset temperature difference may correspond to a temperature value that is used to determine the target temperature differently from the set temperature. Therefore, in the power saving mode, the target temperature may be determined by the set temperature and the preset temperature difference.

The target temperature having the preset temperature difference from the set temperature may be determined differently depending on the indoor temperature and the set temperature. Accordingly, the processor 140 may determine whether the indoor temperature is higher than the set temperature (S303). The indoor temperature may be obtained by a sensing value through a temperature sensor, etc. Depending on the indoor temperature and the set temperature, the target temperature may be determined differently. The target temperature may be the indoor temperature to be reached depending on the operation of the air conditioner. When the operation mode of the air conditioner is a normal mode, the processor 140 may determine the temperature set after receiving it from the user through the input interface or the temperature set by the result of learning the user's preferred temperature as the target temperature. When the operation mode of the air conditioner is a power saving mode, the processor 140 may determine the set temperature set by the user and the temperature having the preset temperature difference as the target temperature.

When the indoor temperature is higher than the set temperature, the processor 140 may determine the target temperature by adding the set temperature and the preset temperature difference (S304). In other words, when the indoor temperature is higher than the set temperature, the air conditioner will perform cooling, so the target temperature may be determined as a temperature higher than the set temperature in order to reduce the power consumption of the air conditioner. Therefore, the power consumption of the air conditioner operating up to the target temperature is generally less than the power consumption of the air conditioner operating up to the set temperature, so the power consumption of the air conditioner is reduced.

For example, when the indoor temperature is 30°C, the set temperature is 23°C, and the preset temperature difference is 2°C, the processor 140 may determine the target temperature to be 25°C. In other words, the power consumption of the air conditioner operating up to the target temperature of 25°C will be less than the power consumption of the air conditioner operating up to the set temperature of 23°C, thereby reducing the power consumption of the air conditioner.

When the temperature having a preset temperature difference from the set temperature exceeds the preferred temperature range, the processor 140 may determine the target temperature to be a maximum value of the preferred temperature range. The user's preferred temperature range may be a temperature range that is narrower than the range of set temperatures that can be set by the user, and may be a temperature range that is set by receiving an input from the user, or may be a temperature range that is the result of learning the user's preferred temperature range by an artificial intelligence model.

When the indoor temperature is higher than the set temperature and thus, the air conditioner is performing cooling, the target temperature may exceed the preferred temperature range because the target temperature adds up the set temperature and the preset temperature difference. In such a case, the processor 140 may determine the target temperature to be the maximum value of the preferred temperature range.

For example, the indoor temperature may be 30°C, the set temperature may be 27°C, the preset temperature difference may be 2°C, and the preferred temperature range may be between 22°C and 28°C. In this case, the set temperature plus the preset temperature difference is 29°C, which exceeds the maximum value of the preferred temperature range of 28°C. In such a case, the temperature is not be significantly different from the indoor temperature of 30°C, so the user's comfort may not be improved. Therefore, the processor 140 may determine the target temperature to be 28°C, which is the maximum value of the preferred temperature range, in order to ensure the user's minimum comfort.

When the operation mode of the air conditioner is a power saving mode, the processor 140 may reduce the command frequency of the compressor. This is performed in the existing power saving mode, and the processor 140 may reduce the power consumption of the air conditioner by reducing the command frequency of the compressor while determining the target temperature.

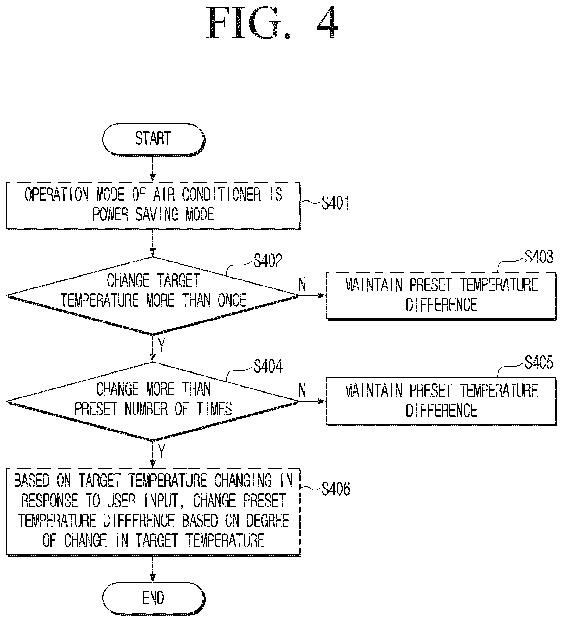

When the target temperature has decreased in response to a user input, the processor 140 may change the preset temperature difference based on the degree to which the target temperature has decreased, and store it in memory or feed it into the training of the artificial intelligence model (S305). In order to change the preset temperature difference, the processor 140 may use a rule-based or artificial intelligence model. Hereinafter, it will be described that the preset temperature difference can be changed with reference to FIG. 4.

FIG. 4 is a flowchart illustrating an example process of changing a preset temperature difference according to various embodiments.

Referring to FIG. 4, the processor 140 may determine that the operation mode of the air conditioner is a power saving mode (S401).

The processor 140 may then determine the number of times that the target temperature has changed in response to a user input, and may identify whether the target temperature has changed more than once (S402). The number of times that the target temperature has changed may be stored and used in the memory 130.

When the number of times that the target temperature has changed is not more than once, the processor 140 may maintain the preset temperature difference (S403). In other words, when the preset temperature difference is 2°C, the processor 140 may maintain the preset temperature difference at 2°C.

When the number of times that the target temperature has changed is more than once, the processor 140 may determine whether the target temperature has changed more than a preset number of times (S404).

In this case, when the number of times that the target temperature has changed is less than a preset number of times, the processor 140 may maintain the preset temperature difference (S405). Similarly, when the preset temperature difference is 2°C, the processor 140 may maintain the preset temperature difference at 2°C.

Operations S402 and S403 may be omitted and replaced with operations S404 and S405.

When the number of times that the target temperature has changed is equal to or greater than a preset number of times and the target temperature is changed in response to a user input, the processor 140 may change the preset temperature difference based on the degree to which the target temperature has changed (S406).

In other words, when the indoor temperature is higher than the set temperature and the air conditioner performs cooling, and if the target temperature has decreased in response to a user input, the processor 140 may decrease the preset temperature difference based on the degree to which the target temperature has decreased. For example, when the preset temperature difference is 2°C, the target temperature may 2°C higher than the set temperature, which may lower the comfort felt by the user. In this case, the processor may identify that the target temperature has decreased in response to a user input and reduce the preset temperature difference to 1°C. In this case, in the power saving mode, the processor 140 may determine the target temperature by adding the preset temperature difference 1°C to the set temperature.

In addition to the number of times that the target temperature has changed, the preset temperature difference may be changed by training an artificial intelligence model. For example, the preset temperature difference may be changed through reinforcement learning by defining a power saving stage according to the preset temperature difference. The power saving stage may be a power saving stage according to the preset temperature difference.

The preset temperature difference that has changed as described above may be stored in the memory or may be fed into the training of the artificial intelligence model.

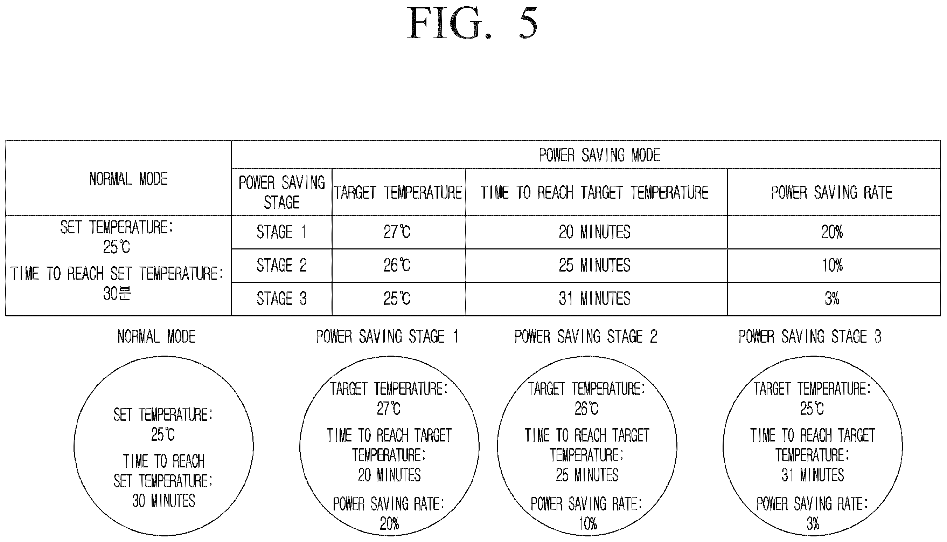

The processor 140 may determine the target temperature through a user input. Hereinafter, it will be described that the target temperature is determined through a user input with reference to FIG. 5.

FIG. 5 is a diagram illustrating an example of a target temperature being determined through a user input according to various embodiments.

Referring to FIG. 5, the processor 140 may control the display to display the degree of reduction in power consumption of the air conditioner according to a preferred temperature range as a power saving rate.

The set temperature and the time to reach the set temperature in a normal mode may be further displayed. The time to reach the set temperature may be the time until the indoor temperature reaches the set temperature in the normal mode. For example, when the set temperature is 25°C, the time to reach the set temperature may be displayed as 30 minutes.

In the artificial intelligence mode, the processor 140 may learn the user's preferred temperature based on an artificial intelligence model according to the indoor temperature and display the learned set temperature and the time to reach the learned set temperature.

The power saving stage may be further displayed according to the target temperature. The power saving stage may be a power saving stage according to the preset temperature difference. For example, power saving stage 1 may be a stage in which the preset temperature difference is 2°C, and when the set temperature is 25°C, the target temperature in the power saving mode may be determined to be 27°C. Power saving stage 2 may be a stage in which the preset temperature difference is 1°C, and when the set temperature is 25°C, the target temperature in the power saving mode may be determined to be 26°C. Alternatively, power saving stage 3 may be a stage in which the preset temperature difference is 0°C, and the target temperature is 25°C, and the air conditioner may operate in the same manner as in the existing power saving mode.

The time to reach the target temperature may be further displayed. The time to reach the target temperature may be the time until the indoor temperature reaches the target temperature in the power saving mode. For example, in power saving stage 1, when the target temperature is 27°C, the time to reach the target temperature may be displayed as 20 minutes. In power saving stage 2, when the target temperature is 26°C, the time to reach the target temperature may be displayed as 25 minutes.

The processor 140 may obtain a temperature from the preferred temperature range through a user input, and determine the obtained temperature as the target temperature. In other words, when the target temperature is selected by comparing the target temperature and the power saving rate by the user, the processor 140 may change the preset temperature difference corresponding to the target temperature. For example, when the power saving stage is stage 1, the target temperature is 27°C and the preset temperature difference is 2°C, but the target temperature is determined to be 25°C through a user input, the processor 140 may change the preset temperature difference to 0°C.

Referring back to FIG. 3, when the indoor temperature is lower than the set temperature, the processor 140 may determine the target temperature by subtracting the preset temperature difference from the set temperature (S306). In other words, when the indoor temperature is smaller than the set temperature, the air conditioner will perform heating, so the target temperature may be determined as a temperature lower than the set temperature to reduce the power consumption of the air conditioner. Thus, the power consumption of the air conditioner operating up to the target temperature is generally less than the power consumption of the air conditioner operating up to the set temperature, and thus the power consumption of the air conditioner is reduced.

For example, when the indoor temperature is 18°C, the set temperature is 24°C, and the preset temperature difference is 2°C, the processor 140 may determine the target temperature to be 22°C. In other words, the power consumption of the air conditioner operating up to the target temperature of 22°C will be less than the power consumption of the air conditioner operating up to the set temperature of 24°C, thereby reducing the power consumption of the air conditioner.

When the temperature having the preset temperature difference from the set temperature is less than the preferred temperature range, the processor 140 may determine the target temperature to be a minimum value of the preferred temperature range. In other words, when the indoor temperature is lower than the set temperature and the air conditioner is performing heating, the target temperature may be less than the preferred temperature range because the target temperature is obtained by subtracting the preset temperature difference from the set temperature. In such a case, the processor 140 may determine the target temperature to be a minimum value of the preferred temperature range.

For example, the indoor temperature may be 18°C, the set temperature may be 21°C, the preset temperature difference may be 2°C, and the preferred temperature range may be between 20°C and 26°C. In this case, the temperature obtained by subtracting the preset temperature difference from the set temperature 19°C, which is below the minimum value of the preferred temperature range of 20°C. In this case, the temperature may not be significantly different from the indoor temperature of 18°C, and the user's comfort may not be improved. Therefore, the processor 140 may determine the target temperature as the maximum value of the preferred temperature range, 20°C, in order to ensure the user's minimum comfort.

When the target temperature has increased in response to a user input, the processor 140 may change the preset temperature difference based on the degree to which the target temperature has increased, and store it in the memory or feed it into the training of the artificial intelligence model (S307). In order to change the preset temperature difference, the processor 140 may use a rule-based or artificial intelligence model.

The process of changing the preset temperature difference when the target temperature increases in response to a user input may be performed in the same or similar manner to that described above with reference to FIG. 4.

In other words, when the indoor temperature is lower than the set temperature and the air conditioner performs heating, and if the target temperature has increased in response to a user input, the processor 140 may reduce the preset temperature difference based on the degree to which the target temperature has increased. For example, when the preset temperature difference is 2°C, the target temperature may be 2°C lower than the set temperature, which may result in lower comfort for the user. In such a case, the processor may identify that the target temperature has increased in response to a user input and reduce the preset temperature difference to 1°C. In such a case, in the power saving mode, the processor 140 may determine the target temperature by subtracting the preset temperature difference of 1°C from the set temperature.

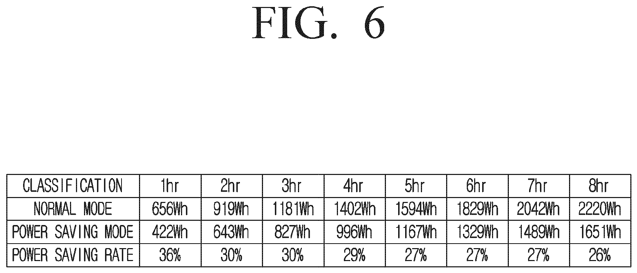

Hereinafter, the power saving rate of the air conditioner in the power saving mode will be described in greater detail below with reference to FIG. 6.

FIG. 6 is a table illustrating an example power saving rate of a power saving mode according to an embodiment.

Referring to FIG. 6, the power consumed in the normal mode and the power saving mode by the air conditioner may be compared. In this case, the power being compared may be compared in terms of a power saving rate. When comparing power consumption in the normal mode and power consumption in the power saving mode, the power savings may decrease over time. In other words, when the air conditioner operates in the power saving mode for 1 hour, the power saving rate may be 36%, but when the air conditioner operates for 8 hours, the power saving rate may decrease to 26%.

In other words, the target temperature having the preset temperature difference from the set temperature is determined based on the set temperature and the stored user's preferred temperature range and thus, in the case of the power saving mode in which the air conditioner operates according to the target temperature, the degree of reduction in the power saving rate may be smaller when compared to the existing power saving mode described in FIG. 1.

Referring again to FIG. 3, processor 140 may compare the power consumption of the air conditioner according to the target temperature and the power consumption of the air conditioner according to the set temperature and control the display to display the degree of reduction in power consumption as a power saving rate (S308). In other words, the processor 140 may display the degree of reduction in power consumption in the power saving mode as a percentage.

The processor 140 may control the communication interface to transmit the determined target temperature to the air conditioner. In other words, the processor 140 may transmit the determined target temperature to the air conditioner so that the indoor temperature can reach the target temperature through operation of the air conditioner.

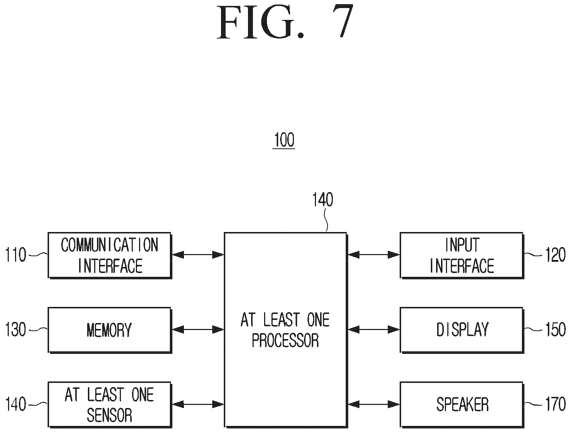

FIG. 7 is a block diagram illustrating an example configuration of an electronic apparatus according to various embodiments.

Referring to FIG. 7, the electronic apparatus 100 may include the communication interface (e.g., including communication circuitry) 110, the input interface (e.g., including input circuitry) 120, the memory 130, the at least one processor (e.g., including processing circuitry) 140, a display 150, at least one sensor 160, and a speaker 170. Hereinafter, a detailed description of the components which overlap with those in FIG. 2 may not be repeated here.

The display 150 may display various information. To this end, the display 150 may include various types of display panels such as a Liquid Crystal Display (LCD) panel, an Organic Light Emitting Diodes (OLED) panel, an Active-Matrix Organic Light-Emitting Diode (AM-OLED), a Liquid Crystal on Silicon (LcoS), a Quantum dot Light-Emitting Diode (QLED), a Digital Light Processing (DLP), a Plasma Display Panel (PDP) panel, an inorganic LED panel, a micro LED panel, etc., but is not limited thereto. Meanwhile, the display 150 may configure a touch screen together with a touch panel, and may also be configured as a flexible panel. For example, the at least one processor 140 may display various information related to the operation of the electronic apparatus 100 on the display 150.

For example, the electronic apparatus 100 may control the display 150 to display a target temperature, a power saving rate of power consumption, etc.

The at least one sensor 160 may obtain a variety of plurality of data associated with a user of the electronic apparatus 100. According to an embodiment, the at least one sensor 160 may include a grip sensor, a proximity sensor, a color sensor, an infrared (IR) sensor, a biometric sensor, an illuminance sensor, a gesture sensor, a barometric pressure sensor, or a magnetic sensor, in addition to a GPS capable of obtaining location data of the electronic apparatus 100, an acceleration/gyro sensor capable of obtaining movement data of the electronic apparatus 100, a temperature sensor, a humidity sensor, and an image sensor capable of taking pictures.

For example, the electronic apparatus 100 may measure an indoor temperature through sensing values obtained through a mid-temperature sensor.

The speaker 170 may output audio. For example, the at least one processor 140 may output various notification sound or voice guidance messages related to the operation of the electronic apparatus 100 through the speaker 170.

For example, the electronic apparatus 100 may output through the speaker 170 that the power saving mode is running. Further, the electronic apparatus 100 may output through the speaker 170 that the indoor temperature has reached the target temperature.

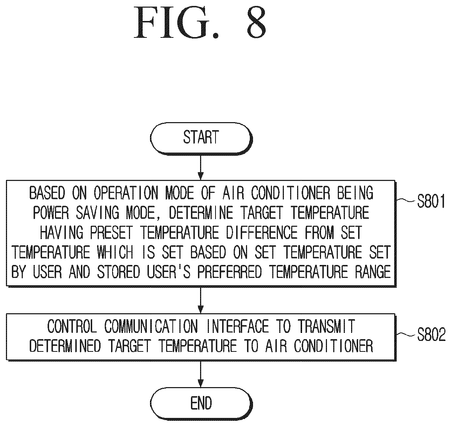

FIG. 8 is a flowchart illustrating an example method of controlling an electronic apparatus according to various embodiments.

Referring to FIG. 8, when the operation mode of the air conditioner is the power saving mode, the target temperature having the preset temperature difference from the set temperature based on the set temperature set by the user and the stored user preference temperature range may be determined (S801).

The communication interface may be controlled to transmit the determined target temperature to the air conditioner (S802).

When the indoor temperature is higher than the target temperature, and the target temperature has decreased in response to a user input, the preset temperature difference may be changed based on the degree to which the target temperature has decreased.

When the indoor temperature is lower than the target temperature, and the target temperature has increased in response to a user input, the preset temperature difference may be changed based on the degree to which the target temperature has increased.

The display may be controlled to display the degree of reduction in power consumption of the air conditioner based on the preferred temperature range.

One temperature from the preferred temperature range may be obtained through a user input, and the obtained temperature may be determined as the target temperature.

Step S801 may include, when the temperature having the preset temperature difference from the set temperature exceeds the preferred temperature range, determining the target temperature to be a maximum value of the preferred temperature range.

Step S801 may include, when the temperature having the preset temperature difference from the set temperature is less than the preferred temperature range, determining the target temperature to be a minimum value of the preferred temperature range.

Step S801 may include, when the indoor temperature is higher than the set temperature, determining the target temperature by adding the set temperature and the preset temperature difference.

Step S801 may include, when the indoor temperature is lower than the set temperature, determining the target temperature by subtracting the preset temperature difference from the set temperature.

The power used by the air conditioner according to the target temperature and the power used by the air conditioner according to the set temperature may be compared, and the display may be controlled to display the degree of reduction in power consumption.

The processor according to an embodiment may include of one or a plurality of processors. In this case, the one or more processors may include at least one of a central processing unit (CPU), a graphics processing unit (GPU), or a neural processing unit (NPU), but are not limited to examples of the above-described processors.

The CPU may include, for example, a generic-purpose processor which may perform not only general calculations but also artificial intelligence calculations, and may efficiently execute complex programs through a multi-layered cache structure. The CPU may be advantageous for a serial processing method that enables organic linkage between the previous calculation result and the next calculation result through sequential calculation. The generic--purpose processor is not limited to the above examples except for a case where the processor is specified as the above-mentioned CPU.

The GPU may include, for example, a processor for large-scale operations such as floating-point operations used for graphics processing, and may perform the large-scale operations in parallel by integrating a large number of cores. In particular, the GPU may be advantageous for a parallel processing method such as a convolution operation or the like, compared to the CPU. In addition, the GPU may be used as a co-processor to supplement a function of the CPU. The processor for the large-scale operations is not limited to the above example except for a case where the processor is specified as the above-mentioned GPU.

The NPU may include, for example, a processor specialized in artificial intelligence calculation using an artificial neural network, and each layer of the artificial neural network may be implemented as hardware (e.g., silicon). In this case, the NPU is specially designed based on requirements of a company, and may thus have a lower degree of freedom compared to the CPU or the GPU, but the NPU may efficiently process the artificial intelligence calculation required by the company. Meanwhile, as the processor specialized for the artificial intelligence calculation, the NPU may be implemented in various forms such as a tensor processing unit (TPU), an intelligence processing unit (IPU), or a vision processing unit (VPU). The artificial intelligence processor is not limited to the above example except for a case where the processor is specified as the above-mentioned NPU.

In addition, the one or more processors may be implemented as a system on chip (SoC). The SoC may further include memory and a network interface such as a bus for data communication between the processor and the memory in addition to the one or more processors.

In case that the system on chip (SoC) included in the electronic apparatus includes a plurality of processors, the electronic apparatus may use some of the plurality of processors to perform the artificial intelligence calculation (e.g., calculation related to the learning or inference of an artificial intelligence model). For example, the electronic apparatus may perform the artificial intelligence calculation using at least one of the GPU, NPU, VPU, TPU, or a hardware accelerator that is specialized for the artificial intelligence calculation such as convolution calculation and matrix multiplication calculation among the plurality of processors. However, this is only an example, and the artificial intelligence calculation may be processed using a generic-purpose processor such as the CPU.

In addition, the electronic apparatus may perform calculation for a function related to the artificial intelligence using multi-cores (e.g., dual-core or quad-core) included in one processor. In particular, the electronic apparatus may perform the artificial intelligence calculation such as the convolution calculation and the matrix multiplication calculation in parallel using the multi-cores included in the processor.

The one or more processors may control to process the input data based on a predefined operation rule or an artificial intelligence model stored in the memory. The predefined operation rule or artificial intelligence model may be acquired by the learning.

"Acquired by the learning" may indicate that the predefined operation rule or artificial intelligence model of a desired feature is acquired by applying a learning algorithm to a lot of learning data. Such learning may be performed on a device itself where the artificial intelligence is performed according to an embodiment, or by a separate server/system.

The artificial intelligence model may include a plurality of neural network layers. At least one layer has at least one weight value, and calculation of the layer may be performed through an operation result of a previous layer and at least one defined operation. Examples of the neural network may include a convolutional neural network (CNN), a deep neural network (DNN), a recurrent neural network (RNN), a restricted Boltzmann machine (RBM), a deep belief network (DBN), a bidirectional recurrent deep neural network (BRDNN), a deep Q-network, and a transformer, but the neural network in this disclosure is not limited to the above examples except for a case where a type of the neural network is specified.

The learning algorithm may refer to a method of training a preset target device (e.g., a robot) using a large number of learning data for the preset target device to make a decision or a prediction by itself. The learning algorithms may include, for example, a supervised learning algorithm, an unsupervised learning algorithm, a semi-supervised learning algorithm, or a reinforcement learning algorithm, but the learning algorithm of the disclosure is not limited to the above-described examples, unless specified otherwise.

The learning algorithm may refer to a method of training a preset target device (e.g., robot) using a large number of learning data for the preset target device to make a decision or obtain information on its own. The learning algorithms may include, for example, a supervised learning algorithm, an unsupervised learning algorithm, a semi-supervised learning algorithm, or a reinforcement learning algorithm, and the learning algorithm of this disclosure is not limited to the above-described examples, unless specified otherwise.

According to an embodiment, the above-described various embodiments may be implemented as software including instructions stored in machine-readable storage media, which can be read by machine (e.g.: computer). The machine refers to a device that calls instructions stored in a storage medium, and can operate according to the called instructions, and the device may include an electronic apparatus according to the aforementioned embodiments. In case an instruction is executed by a processor, the processor may perform a function corresponding to the instruction by itself, or using other components under its control. The instruction may include a code that is generated or executed by a compiler or an interpreter. The machine-readable storage medium may be provided in the form of a non-transitory storage medium. Here, the 'non-transitory' storage medium is tangible without including a signal (e.g. electromagnetic waves), and does not distinguish whether data are semi-permanently or temporarily stored in the storage medium. For example, the 'non-transitory storage medium' may include a buffer in which data is temporarily stored.

According to an embodiment, the methods according to an embodiment may be included and provided in a computer program product. The computer program product may be traded as a product between a seller and a purchaser. The computer program product may be distributed in the form of a storage medium (e.g., compact disc read only memory (CD-ROM)) that is readable by devices, may be distributed through an application store (e.g., PlayStore^{™}) or directly between two user devices (e.g., smartphones), or may be distributed online (e.g., by downloading or uploading). In the case of an online distribution, at least part of the computer program product (e.g., a downloadable application) may be at least temporarily stored in a storage medium readable by a machine such as a server of the manufacturer, a server of an application store, or the memory of a relay server or may be temporarily generated.

Although various example embodiments of the present disclosure have been illustrated and described above, the disclosure is not limited to the various example embodiments described above, and various modifications may be made by one of ordinary skill in the art without departing from the gist of the disclosure including the claims, and such modifications are not to be understood in isolation from the technical ideas or prospect of the disclosure. It will also be understood that any of the embodiment(s) described herein may be used in connection with any other embodiment(s) described herein.

## Claims

1. An electronic apparatus comprising:
a communication interface configured to perform communication with an air conditioner;
an input interface;
memory storing at least one instruction and a user's preferred temperature range; and
at least one processor configured to, by executing the at least one instruction, control the communication interface to receive information about an operation mode of the air conditioner from the air conditioner, and based on the operation mode of the air conditioner being a normal mode, determine a set temperature input through the input interface as a target temperature,
wherein the at least one processor is configured to:
based on the operation mode of the air conditioner being a power saving mode, determine a target temperature having a preset temperature difference from the set temperature based on the set temperature which is set by a user and the stored user's preferred temperature range; and
control the communication interface to transmit the determined target temperature to the air conditioner.

2. The device as claimed in claim 1, wherein the at least one processor is configured to:
based on an indoor temperature being higher than the target temperature and the target temperature decreasing in response to the user input, change the preset temperature difference based on a degree to which the target temperature has decreased.

3. The device as claimed in claim 1, wherein the at least one processor is configured to:
based on an indoor temperature being smaller than the target temperature and the target temperature increasing in response to the user input, change the preset temperature difference based on a degree to which the target temperature has increased.

4. The device as claimed in claim 1, further comprising:
a display,
wherein the at least one processor is configured to:
control the display to display a degree of reduction in power consumption of the air conditioner according to the preferred temperature range as a power saving rate; and
obtain one temperature from the preferred temperature range through the user input, and determine the obtained temperature as a target temperature.

5. The device as claimed in claim 1, wherein the at least one processor is configured to:
based on a temperature having the preset temperature difference from the set temperature exceeding the preferred temperature range, determine the target temperature as a maximum value of the preferred temperature range; and
based on a temperature having the preset temperature difference from the set temperature being less than the preferred temperature range, determine the target temperature as a minimum value of the preferred temperature range.

6. The device as claimed in claim 1, wherein the at least one processor is configured to:
based on an indoor temperature being higher than the set temperature, determine the target temperature by adding the set temperature and the preset temperature difference; and
based on an indoor temperature being smaller than the set temperature, determine the target temperature by subtracting the preset temperature difference from the set temperature.

7. The device as claimed in claim 1, further comprising:
a display,
wherein the at least one processor is configured to compare power consumption of the air conditioner according to the target temperature and power consumption of the air conditioner according to the set temperature, and control the display to display a degree of reduction in power consumption as a power saving rate.

8. A controlling method of an electronic apparatus, including controlling a communication interface to receive information about an operation mode of an air conditioner from the air conditioner, and based on the operation mode of the air conditioner being a normal mode, determining a set temperature input through an input interface as a target temperature, the method comprising:
determining a target temperature having a preset temperature difference from the set temperature based on the set temperature which is set by a user and the stored user's preferred temperature range; and
controlling the communication interface to transmit the determined target temperature to the air conditioner.

9. The method as claimed in claim 8, further comprising:
based on an indoor temperature being higher than the target temperature and the target temperature decreasing in response to the user input, changing the preset temperature difference based on a degree to which the target temperature has decreased.

10. The method as claimed in claim 8, comprising:
based on an indoor temperature being smaller than the target temperature and the target temperature increasing in response to the user input, changing the preset temperature difference based on a degree to which the target temperature has increased.

11. The method as claimed in claim 8, comprising:
controlling the display to display a degree of reduction in power consumption of the air conditioner according to the preferred temperature range; and
obtaining one temperature from the preferred temperature range through the user input, and determining the obtained temperature as a target temperature.

12. The method as claimed in claim 8, comprising:
based on a temperature having the preset temperature difference from the set temperature exceeding the preferred temperature range, determining the target temperature as a maximum value of the preferred temperature range; and
based on a temperature having the preset temperature difference from the set temperature being less than the preferred temperature range, determining the target temperature as a minimum value of the preferred temperature range.

13. The method as claimed in claim 8, comprising:
based on an indoor temperature being higher than the set temperature, determining the target temperature by adding the set temperature and the preset temperature difference; and
based on an indoor temperature being smaller than the set temperature, determining the target temperature by subtracting the preset temperature difference from the set temperature.

14. The method as claimed in claim 8, comprising:
comparing power consumption of the air conditioner according to the target temperature and power consumption of the air conditioner according to the set temperature, and controlling the display to display a degree of reduction in power consumption.

15. A non-transitory computer-readable recording medium storing a computer instruction that, when executed by a processor of an electronic apparatus, causes the electronic apparatus to:
control the communication interface to receive information about an operation mode of the air conditioner from the air conditioner, and based on the operation mode of the air conditioner being a normal mode, determine a set temperature input through the input interface as a target temperature,
based on the operation mode of the air conditioner being a power saving mode, determine a target temperature having a preset temperature difference from the set temperature based on the set temperature which is set by a user and the stored user's preferred temperature range; and
control the communication interface to transmit the determined target temperature to the air conditioner.
